# EUROPEAN PATENT SPECIFICATION

(11) **EP 1 800 472 B1**
(45) Date of publication and mention of the grant of the patent: **19.07.2017**
(21) Application number: 05789718.3
(22) Date of filing: 10.03.2005
(51) Int. Cl.: H04M 1/725, H04N 5/262

(54) **IMAGE COMPOSITING METHOD AND APPARATUS**
BILDERSTELLUNGSVERFAHREN UND -VORRICHTUNG
PROCEDE ET APPAREIL DE COMPOSITION D'IMAGE

(30) Priority: 24.09.2004 KR 20040076812
(43) Date of publication of application: 27.06.2007
(73) Proprietor: MTEKVISION CO., LTD., Geumcheon-gu Seoul 153-803 (CN)
(72) Inventor: MIN, Kyung-Chul, Seoul 120-835 (KR); KANG, Se-Jin, Seoul 150-010 (KR); PARK, Sang-Hyung, Seongnam-si, Gyeonggi-do 462-150 (KR)
(74) Representative: Dr. Weitzel & Partner
(86) International application number: PCT/KR2005/000677
(87) International publication number: WO 2006/033511

(56) References cited:
- WO-A1-92/05664
- WO-A1-03/088651
- KR-A- 2004 001 170
- US-A- 5 914 725
- US-A1- 2004 131 278
- US-B1- 6 483 540
- US-B1- 6 710 801

## Description

### Field of the invention

The present invention relates to an image combining method and apparatus, more specifically to a method and apparatus for generating a combined image using plural picture images.

### Background of the invention

Recently, many image file generating devices (e.g., digital cameras, camera phones), which convert an external image into an image file in the form of electronic file to avail duplication and transfer, are developed and marketed.

Camera phones refer to cellular phones with a function of digital camera for portability and ease of use. A user can take a picture and generate an electronic file (i.e., image file) to output on a display or use as a wallpaper or transfer to other users via e-mail.

Conventional image file generating devices, such as camera phones, could generate an image file of an external image as it was, but could not generate an image file of the user's own or with a unique message (e.g., expression of love). Thus, there have been a number of attempts to overcome this shortcoming by, for example, adding a superimpose function.

Superimposing refers to overlapping an external signal or picture signal with another picture signal. For example, a picture signal can be overlaid with a caption or date, using the superimpose function in television broadcasting or camera phones.

In the conventional method for generating a combined image using the superimpose technique, a picture, characters, or a scene to be combined with is stored first in the memory and then is combined with an external picture. See for example Document WO03088651 (SEIKO EPSON CORP.) 23 October 2003 (23.10.2003) that discloses a method for combining captured images with background images in a digital camera.

Document US5914725 (POWERTV INC.) 22 June 1999 (22.06.1999) that discloses Pixel and alpha value interpolation for graphics display.

Document WO9205664 (SPACEWARD HOLDINGS Ltd.) 2 April 1992 (02.04.1992) that discloses video image composition system.

Document KR20040001170 (SAMSUNG ELECTRONICS CO LTD.) 7 January 2004 (07.01.2004) that discloses method for photographing and storing images in camera phone.

Hereinafter, the conventional method for generating a combined image using the superimpose technique will be described briefly.

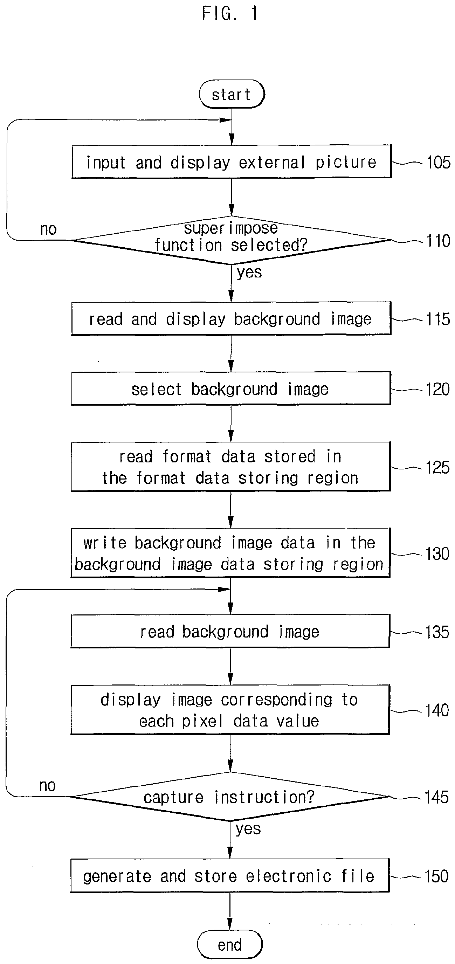

FIG. 1 is a flowchart showing the conventional method for generating a combined image by the superimpose technique.

Referring to FIG. 1, on initiating the camera function, the image file generating device outputs an external picture, which is inputted through a camera lens, on a display (step 105). At this time, the external picture from the camera lens may be converted into digital data to be temporarily stored in the memory and then outputted on the display.

At step 110, the image file generating device checks whether the superimpose function is selected. If the superimpose function is not selected, step 105 is repeated, but, if the superimpose function is selected, the method proceeds to step 115 to extract one of the pre-stored background images and output to the display. These background images can be used to perform the superimpose function.

In step 120, the image file generating device receives a selection of background image from the user.

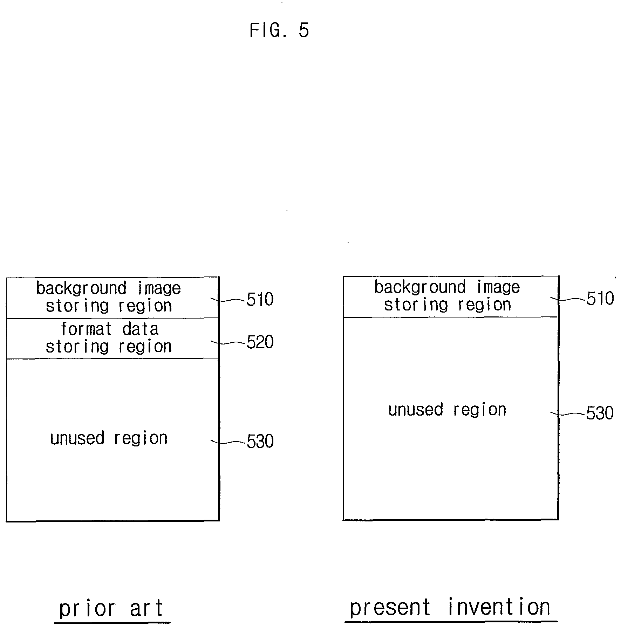

Later in step 125, the image file generating device reads format data stored in a specific region (format data storing region) of the memory. Format data contains information on which region of the background image will function as a background region and which region will function as a preview region (i.e., where the external picture is displayed). In step 130, the image file generating device writes the selected background image, which was selected in step 120, in a specific region (i.e., background image storing region) of the memory. At this time, the background image to be written may be modified to be associated with the format data extracted in step 125. The usage example of preview memory for generating the combined image is shown in FIG. 5. Namely, in order to generate the combined image, the format data and a background image are stored in separate regions of memory.

In step 135, the image file generating device reads the background image from the background image storing region, and in step 140 outputs the image corresponding to each pixel data value (i.e., the background image from the memory or the external image from the camera lens) on the display. At this time, in association with the format data of step 125, part of the background image corresponding to the background region and the external image are displayed on the background region and the preview region, respectively.

In step 145, the image file generating device determines whether or not the user inputs a capture instruction. If there is no capture instruction, the method returns to step 140, but if there is a capture instruction, the method proceeds to step 150 to generate an electronic file (i.e., a digital image) corresponding to the combined image being displayed on the display and store in the memory. Through aforementioned steps, the user can take a picture with various background images (e.g., a flower garden image).

As described above, since image file generating devices with the conventional superimpose function had to equip additional memory or storing regions for separately storing background images and format data, efficient use of memory was impossible.

Also, since image file generating devices with the conventional superimpose function had to use a plurality of data stored in additional memory or storing region and determine whether each pixel data value corresponded to the background region or preview region when generating a combined image, the efficiency of data processing was low.

### Detailed description of the invention

### Technical objectives

The objective of the present invention, to overcome the aforementioned shortcomings, is to provide an image combining method and apparatus that can provide an efficient use of memory by eliminating the need for additional format data and additional memory when generating a combined image.

Another objective of the present invention is to provide an image combining method and apparatus that can increase the efficiency of data processing by using a minimum amount of data value, when combining images, to speed up the determination of whether each pixel corresponds to the background region or preview region.

### Technical solution

To achieve aforementioned objects, one aspect of the present invention provides a method and device for combining a background image with a real-time external picture according to the claims.

### Brief description of the drawings

FIG. 1 is a flowchart showing the conventional method for combining images by the superimpose technique;
FIG. 2 is a block diagram of an image file generating device according to a preferred embodiment of the present invention;
FIG. 3 is a flowchart of a method for combining images using the superimpose technique according to a preferred embodiment of the present invention;
FIG. 4 illustrates an update state of region classification bit according to a preferred embodiment of the present invention;
FIG. 5 illustrates an example of preview memory usage according to a preferred embodiment of the present invention; and
FIG. 6 illustrates a screen display of a combined image using the superimpose technique according to a preferred embodiment of the present invention.

200 : image file generating device
210 : camera part
215 : telecommunication part
220 : audio signal I/O
225 : key input part
230 : video information display
235 : memory
240 : controller

### Embodiment

It is needed to refer to the accompanying drawings for illustrating a preferred embodiment of the present invention and description thereof to fully understand the present invention and the advantages of the present invention in operation and the objectives being achieved by the present invention.

Hereinafter, a preferred embodiment of the present invention will be described with the accompanying drawings. In description, an identical number will be used to indicate the same element regardless of the drawing number for the purpose of helping understand the present invention.

The superimpose technique according to the present invention can be applied generally to all kinds of image file generating devices, such as digital cameras, camera phones, web cameras, which generate an image file from an external image. However, hereinafter the case of applying the superimpose technique to the camera phone will be mainly described for the convenience of description.

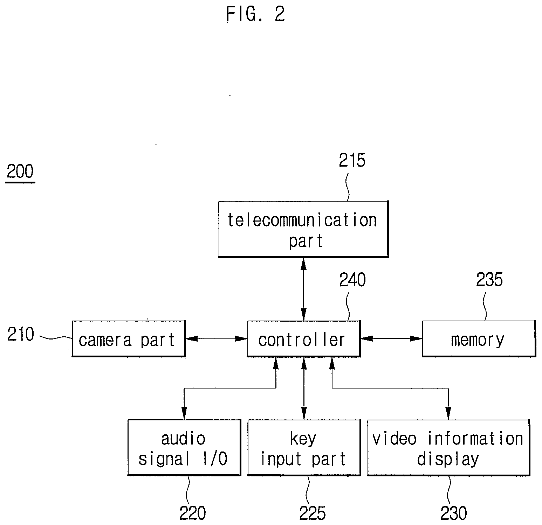

FIG. 2 is a block diagram of an image file generating device according to a preferred embodiment of the present invention.

Referring to FIG. 2, the image file generating device 200 comprises a camera part 210, a telecommunication part 215, an audio signal I/O 220, a key input part 225, a video information display 230, a memory 235, and a controller 240.

The camera part 210, which converts the external picture into digital data, may comprise lens, CCD (Charge Coupled Device), CDS/AGC (Correlated Double Sampling/Auto Gain Control), ADC (Analogue-to-Digital Converter), DSP, and digital image generating part.

The lens receives an image of external picture (i.e., subject) and delivers to the CCD. The CCD converts an optical signal received from the lens into an electrical signal (captured picture signal) to output. The CDS/AGC eliminates noise from the captured picture signal and controls gain. Generally, the CCD and CDS/AGC may be embodied as a CMOS (Complementary Metal Oxide Semiconductor sensor) chip.

The ADC converts a portion for one field of the captured picture signal, which was gain-controlled by the CDS/AGC, into a digital signal to output to the DSP (Digital Signal Processor). The DSP processes the portion for one field of the digitally-converted captured signal to generate a video signal(Y - luminance signal, C - color signal) in a predetermined method (e.g., NTSC (National Television System Committee), PAL (Phase Alternation by Line)). Then, the DSP under the control of the controller 240 delivers the video signal (Y, C) to the digital image generating part or the video information display 230 for display. If a user pushes a capture button (e.g., camera shutter) of the image file generating device 200, the DSP delivers the captured video signal to the digital image generating part, and stores the digital image generated by the digital image generating part in the memory 235.However, until the user pushes the capture button, the DSP under the control of the controller 240 stores the video signal temporarily in the memory 235 then has it displayed on the video information display 230. At this time, it is possible that the memory 235 for storing the digital image and the memory 235 for temporarily storing the video signal are separate memory means or separate regions in the same memory means. Moreover, when temporarily stored in the memory 235, the video signal is in the digital data format, such as binary code and hexadecimal code. Also, the digital image generating part can convert the video signal from the DSP into a predetermined data format (e.g., JPEG) and compress by a predetermined ratio to store in the memory 235, and in the case of performing the superimpose function, generate a superimposed image, which consists of the background image appearing on the background region and the external image appearing on the preview region, to store in the memory 235.

The telecommunication part 215 makes it possible for the image file generating device 200 to work as a mobile terminal. In other words, the telecommunication part under the control of the controller 240 down-converts and demodulates an RF signal received through an antenna to output through the audio signal I/O 220, and modulates and up-converts a signal from the audio signal I/O 220 into an RF signal to transmit through the antenna via air.

The audio signal I/O 220 can be divided into an audio signal input part (e.g., microphone) and an audio signal output part (e.g., speaker).

The key input part 225 can comprise numeric keys, function keys, plural keys for controlling (e.g., image capture, store, etc) the camera part 210, and a function key for performing the superimpose function. A key input signal corresponding to the key pushed by the user is applied to the controller 240 to perform the corresponding operation.

The video information display 230, e.g., LCD, is means for displaying an image or characters.

The memory 235 stores an operating system of the image file generating device 200, more than one background image for performing the superimpose function, an external picture image that is inputted in real time and temporarily stored, the digital image (e.g., an electronic file corresponding to the external picture, a superimposed image consisting of the background image appearing on the background region and the external image appearing on the preview region, etc) that the digital image generating part generates, etc. It is apparent that the memory 235 can consist of a plurality of memories or a plurality of storing regions according to the type of data stored therein. Also, it is possible to assign a temporary memory (i.e., preview memory) for temporarily storing data (e.g., real-time external picture image and/or background image) to be displayed real time on the video information display 230 into one of the regions in the memory 230, but the temporary memory can be located within the controller 240. The memory 235 may be embodied with an SRAM (Static Random Access Memory) or an SDRAM (Synchronous Dynamic Random Access Memory) for high-speed processing and easy control.

The controller 240 controls the camera part 210, the telecommunication part 215, the audio signal I/O 220, the key input part 225, the video information display 230, and the memory 235 in order to perform aforementioned functions. Also, when temporarily duplicating a background image to a certain region of the memory 235 or an additional memory for the purpose of performing the superimpose function, the controller 240 stores any bit value of each pixel data value consisting of the background image after changing to a predetermined value (e.g., 0 or 1 in case of binary code). The arbitrary bit of each pixel data value changing to a predetermined value to recognize whether the pixel corresponds to the background region or the preview region can be more than one bit or in any position. For the convenience of description, however, the bit is assumed to be the LSB (Least Significant Bit) hereinafter. Also, the scheme of using the LSB as a region classification bit has advantages such as decreasing the heterogeneity from the original image as well as the easy region classification. The aforementioned function of the controller 240 will be described in detail with the accompanying drawings.

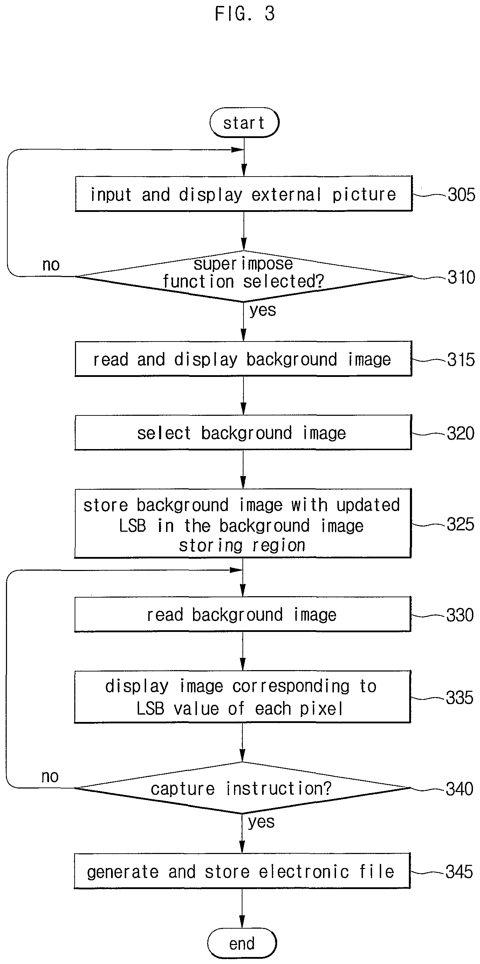

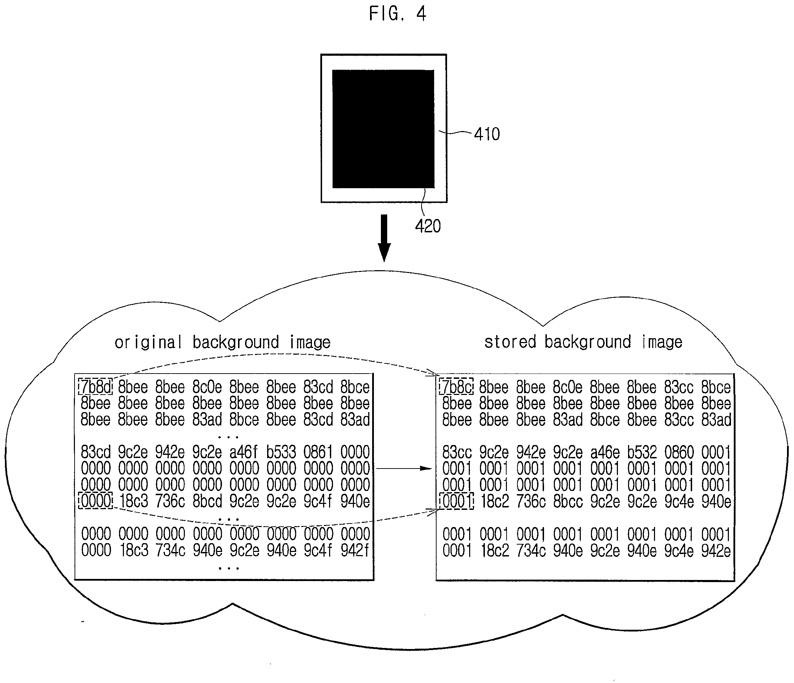

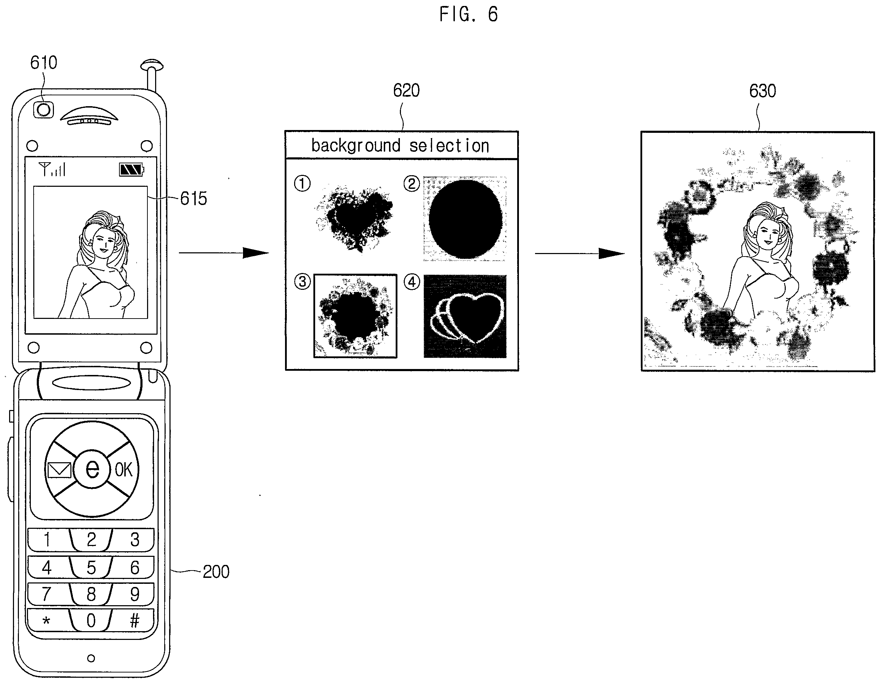

FIG. 3 is a flowchart of a method for combining images using the superimpose technique according to a preferred embodiment of the present invention, FIG. 4 illustrates an update state of region classification bit according to a preferred embodiment of the present invention, FIG. 5 illustrates example of preview memory usage according to a preferred embodiment of the present invention, and FIG. 6 illustrates a screen display for combining images using the superimpose technique according to a preferred embodiment of the present invention.

Referring to FIG. 3, the image file generating device 200 displays an external picture, which is inputted through the camera lens when the camera is functioning, on the display (step 305). At this time, the image file generating device 200 can convert the external picture inputted through the camera part 210 into digital data to temporarily store in a certain region of the memory 235 or the memory for preview and then output on the display.

In step 310, the image file generating device 200 checks whether the superimpose function is selected through the key input part 225. If the superimpose function is not selected, it returns to step 305. If the superimpose function is selected, it proceeds to step 315 to read background images pre-stored in a specific region of the memory 235 or a background image storing part and displays them on the video information display 230 for the purpose of combining images (i.e., perform the superimpose function). The background images may consist of a background region and a preview region, and the preview region can be filled with a predetermined color (e.g., black) for easy identification. Thus, pixel data values corresponding to the preview region among pixel data values of the background image can have a consistent value (e.g., "0000" in binary code) indicating the color.

In step 320, the image file generating device 200 receives a selection of background image from the user.

In step 325, the image file generating device 200 reads the background image, which is selected in step 320, from a specific region of the memory 235 or the background image storing part and writes in the memory for preview. At this time, data values corresponding to the background image are written in the memory for preview. The LSB of each pixel data value, as the region classification bit, is updated in association with the region where each pixel is located. Hereinafter, the description will assume that a region classification value for indicating the background region where the background image has to appear is "0" in binary code. Also, this description will assume that a region classification value for indicating the preview region where the real time external picture has to appear is "1" in binary code. As described above, among data values of the selected background image, the region classification bit in data value (e.g., 7b8d) of the color not appearing in the preview region is updated to the region classification value (i.e., 7b8c) indicating its presence in the background region and then stored. It can be easily understood that "d" in hexadecimal code is "1101" in binary code and "c" in hexadecimal code is "1100" in binary code. Of course, if the value of pre-existing region classification bit is identical to the region classification value to be updated to, it is not needed to update. Also, the region classification bit in data value (e.g., 0000) of the color is updated to the region classification value (i.e., 0001) for indicating its presence in the preview region and stored. As described above, the region classification value indicating where each pixel is located is updated and stored during the process of writing the user-selected background image in the memory for preview (or a specific region of the memory 235). Thus, the image file generating device 200 displays the external picture only on the position where the region classification value of a pixel is "1" in the later process. Thus, it is easy to determine which image will be displayed on that pixel just by checking the region classification bit in each data value of the background image stored in the memory for preview, not by using additional format data. The result of updated and stored values of region classification bit by the image file generating device 200 is shown in FIG. 4. Also, as described above, since the image file generating device 200 does not need format data, and as a result there is no need to store format data always in the memory 235 for the purpose of performing the superimpose function, it is possible to use the memory efficiently. Example usage of the memory for preview of the image file generating device 200, in comparison with the prior art, is shown in FIG. 5. As shown in FIG. 5, since format data must be needed in the prior art in performing the superimpose function, a format data storing region 520 must be assigned to the memory or an additional memory is required. It can be easily understood, however, that there is no format data storing region in the image file generating device 200.

Referring FIG. 3 again, in step 330, the image file generating device 200 reads the background image stored in a specific region of the memory 235 or the memory for preview. Then in step 335, an image corresponding to each pixel data value (i.e., pixel data value of which region classification bit is updated with the region classification value) is displayed on the video information display 230. At this time, the background image appears on the background region 410 and the real time external picture that the camera part 210 inputs appears on the preview region 420 in the image to be displayed on the video information display 230. Namely, more than two images coexist on different regions of the same display.

In step 340, the image file generating device 200 checks whether a capture instruction is inputted from the key input part 225. If the capture instruction is not inputted, it returns to step 335, and if the capture instruction is inputted, it proceeds to step 345 to generate an electronic file (i.e., digital image) corresponding to the combined image (i.e., more than two images coexisting on different regions of the same display) that is currently appearing on the video information display 230 and to store in a specific region of the memory 235 or a separate combined image storing part.

Hereinafter, the aforementioned combined image generation process will be described briefly with reference to the screen display illustrated in FIG. 6.

When a user initiates the camera function of the image file generating device 200, the external picture that is inputted through the camera lens 610 is displayed, like the screen 615, on the video display 230.

Then, if the user selects the superimpose function, the image file generating device 200 reads more than one background images from the memory 235 and displays, as in the screen 620, on the video information display 230. As shown in the screen 620, the background region and the preview region in each background image are distinguishable, and the preview region is filled with an arbitrary color.

Then, if the user selects any one of the background images, the selected background image is displayed on the video information display 230, and at the same time, the external picture that is inputted through the camera lens 610 is displayed on the preview region within the background image (screen 630). As described earlier, the region classification bit in each pixel data value corresponding to the background image when the user selects any one of background image is changed to a region classification value and stored.

If the user inputs the capture instruction in this state, the digital image corresponding to the screen 630 is newly generated and stored in the memory 235.

The accompanying drawings and detailed description are only an example of the present invention, serve only for describing the present invention, and by no means limit or restrict the scope of the present invention as defined by the claims. Thus, any person of ordinary skill in the art shall understand that a large number of permutations and other embodiments are possible. The true scope of the present invention is defined only by the appended claims.

### Industrial applicability

As described above, the present invention does not need additional format data when generating a combined image so that more efficient use of memory, without additional memory, is possible.

Moreover, the present invention can rapidly determine whether each pixel corresponds to the background region or the preview region by use of a minimum amount of data value, resulting in an increased efficiency of data processing.

## Claims

1. A method for combining a background image in an image file generating device (200) with a real-time external picture that a camera part (210) inputs, comprising:
reading an original background image from a memory (235), wherein the original background image consists of a background region for the appearance of the background image and a preview region for the appearance of the real-time external picture; generating an update background image by assigning pixels of the original background image to either a selected preview region or a selected background region, **characterized in that**:
the pixel data value of each pixel of the original background image is modified by setting the least significant bit (LSB) of the respective pixel data value as a region classification value such that pixels belonging to the selected preview region and pixels belonging to the selected background region have pixel data values with different least significant bit (LSB) settings;
displaying the background region using the update background image and displaying the preview region using the real-time external picture, wherein the background region and the preview region are identified by the region classification value; and
generating and storing a digital image corresponding to the displayed update background image and the displayed real-time external picture when a capture instruction is inputted.

2. The method of claim 1, wherein the preview region is filled with an arbitrary color in the original background image and each pixel data value corresponding to the preview region has data value corresponding to the color

3. An image file generating device with camera for combining a background image with a real-time external picture that said camera inputs, comprising:
a key input part, receiving a selection data of an original background image, wherein the original background image consists of a background region for the appearance of the background image and a preview region for the appearance of the real-time external picture, and a capture instruction;
a controller set to generate an update background image by assigning pixels of the original background image to either a selected preview region or a selected background region,
charactered in that:
the pixel data value of each pixel of the original background image is modified by setting the least significant bit (LSB) of the respective pixel data value as a region classification value such that pixels belonging to the selected preview region and pixels belonging to the selected background region have pixel data values with different least significant bit (LSB) settings;
a display, under the control of the controller, set to display the background region using the update background image and displaying the preview region using the real-time external picture inputted through the camera part wherein the background region and the preview region are identified by the region classification value;
a digital image generating part, under the control of the controller, set to generate a digital image corresponding to the displayed update background image and the displayed real-time external picture when the capture instruction is inputted; and
a memory, set to store the original background image, the update background image, and the digital image.

4. The image file generating device of claim 3, wherein the preview region is filled with an arbitrary color in the original background image and each pixel data value corresponding to the preview region has data value corresponding to the color.

## Patentansprüche

1. Verfahren zum Kombinieren eines Hintergrundbildes in einer Bilddateierzeugungsvorrichtung (200) mit einem externen Echtzeitbild, das über einen Kamerateil (210) eingegeben wird, umfassend:
Lesen eines ursprünglichen Hintergrundbildes aus einem Speicher (235), wobei das ursprüngliche Hintergrundbild aus einem Hintergrundbereich zum Darstellen des Hintergrundbildes und einem Vorschaubereich zum Darstellen des externen Echtzeitbildes besteht;
Erzeugen eines Aktualisierungshintergrundbildes durch Zuweisen von Pixeln des ursprünglichen Hintergrundbildes zu entweder einem ausgewählten Vorschaubereich oder einem ausgewählten Hintergrundbereich,
**dadurch gekennzeichnet, dass**:
der Pixeldatenwert jedes Pixels des ursprünglichen Hintergrundbildes durch Einstellen des geringstwertigen Bits (LSB) des jeweiligen Pixeldatenwerts als Bereichsklassifikationswert derart, dass Pixel, die zum ausgewählten Vorschaubereich gehören, und Pixel, die zum ausgewählten Hintergrundbereich gehören, Pixeldatenwerte mit unterschiedlichen Einstellungen des geringstwertigen Bits (LSB) aufweisen, modifiziert wird;
Anzeigen des Hintergrundbereichs unter Verwendung des Aktualisierungshintergrundbildes und Anzeigen des Vorschaubereichs unter Verwendung des externen Echtzeitbildes, wobei der Hintergrundbereich und der Vorschaubereich durch den Bereichsklassifikationswert identifiziert werden; und
Erzeugen und Speichern eines digitalen Bildes, das dem angezeigten Aktualisierungshintergrundbild und dem angezeigten externen Echtzeitbild entspricht, wenn eine Erfassungsanweisung eingegeben wird.

2. Verfahren nach Anspruch 1, wobei der Vorschaubereich mit einer beliebigen Farbe im ursprünglichen Hintergrundbild gefüllt wird und jeder Pixeldatenwert, der dem Vorschaubereich entspricht, einen der Farbe entsprechenden Datenwert aufweist.

3. Bilddateierzeugungsvorrichtung mit Kamera zum Kombinieren eines Hintergrundbildes mit einem externen Echtzeitbild, das von der Kamera eingegeben wird, umfassend:
einen Tasteneingabeteil, der Auswahldaten eines ursprünglichen Hintergrundbildes, wobei das ursprüngliche Hintergrundbild aus einem Hintergrundbereich zum Darstellen des Hintergrundbildes und einem Vorschaubereich zum Darstellen des externen Echtzeitbildes besteht, und eine Erfassungsanweisung empfängt;
eine Steuerung, die derart eingerichtet ist, dass sie ein Aktualisierungshintergrundbild durch Zuweisen von Pixeln des ursprünglichen Hintergrundbildes zu entweder einem ausgewählten Vorschaubereich oder einem ausgewählten Hintergrundbereich erzeugt,
**dadurch gekennzeichnet, dass**:
der Pixeldatenwert jedes Pixels des ursprünglichen Hintergrundbildes durch Einstellen des geringstwertigen Bits (LSB) des jeweiligen Pixeldatenwerts als Bereichsklassifikationswert derart, dass Pixel, die zum ausgewählten Vorschaubereich gehören, und Pixel, die zum ausgewählten Hintergrundbereich gehören, Pixeldatenwerte mit unterschiedlichen Einstellungen des geringstwertigen Bits (LSB) aufweisen, modifiziert wird;
eine Anzeige, gesteuert durch die Steuerung, die derart eingerichtet ist, dass sie den Hintergrundbereich unter Verwendung des Aktualisierungshintergrundbildes anzeigt und den Vorschaubereich unter Verwendung des über den Kamerateil eingegebenen externen Echtzeitbildes anzeigt, wobei der Hintergrundbereich und der Vorschaubereich durch den Bereichsklassifikationswert identifiziert werden;
einen digitalen Bilderzeugungsteil, gesteuert durch die Steuerung, der derart eingerichtet ist, dass er ein digitales Bild erzeugt, das dem angezeigten Aktualisierungshintergrundbild und dem angezeigten externen Echtzeitbild entspricht, wenn die Erfassungsanweisung eingegeben wird; und
einen Speicher, der derart eingerichtet ist, dass er das ursprüngliche Hintergrundbild, das Aktualisierungshintergrundbild und das digitale Bild speichert.

4. Bilddateierzeugungsvorrichtung nach Anspruch 3, wobei der Vorschaubereich mit einer beliebigen Farbe im ursprünglichen Hintergrundbild gefüllt wird und jeder Pixeldatenwert, der dem Vorschaubereich entspricht, einen der Farbe entsprechenden Datenwert aufweist.

## Revendications

1. Procédé pour combiner une image d'arrière-plan dans un dispositif de génération de fichiers image (200) avec une photo externe en temps réel qu'une partie appareil photo (210) fournit en entrée, consistant à :
lire une image d'arrière-plan originale dans une mémoire (235), l'image d'arrière-plan originale étant constituée d'une région d'arrière-plan pour l'apparence de l'image d'arrière-plan et d'une région de prévisualisation pour l'apparence de la photo externe en temps réel ;
générer une image d'arrière-plan mise à jour en attribuant des pixels de l'image d'arrière-plan originale soit à une région de prévisualisation sélectionnée, soit à une région d'arrière-plan sélectionnée,
**caractérisé en ce que**
la valeur de données de pixel de chaque pixel de l'image d'arrière-plan originale est modifiée en définissant le bit le moins significatif (LSB) de la valeur de données de pixel respective comme une valeur de classification de région de sorte que les pixels appartenant à la région de prévisualisation sélectionnée et les pixels appartenant à la région d'arrière-plan sélectionnée aient des valeurs de données de pixel avec des définitions de bit le moins significatif (LSB) différentes ;
afficher la région d'arrière-plan en utilisant l'image d'arrière-plan mise à jour et afficher la région de prévisualisation en utilisant la photo externe en temps réel,
la région d'arrière-plan et la région de prévisualisation étant identifiées par la valeur de classification de région ; et
générer et stocker une image numérique correspondant à l'image d'arrière-plan mise à jour affichée et à la photo externe en temps réel affichée quand une instruction de capture est fournie en entrée.

2. Procédé selon la revendication 1, selon lequel la région de prévisualisation est remplie d'une couleur arbitraire dans l'image d'arrière-plan originale et chaque valeur de données de pixels correspondant à la région de prévisualisation a une valeur de données correspondant à la couleur.

3. Dispositif de génération de fichiers image avec un appareil photo pour combiner une image d'arrière-plan avec une photo externe en temps réel que ledit appareil photo fournit en entrée, comprenant :
une partie d'entrée par touches, recevant des données de sélection d'une image d'arrière-plan originale, l'image d'arrière-plan originale étant constituée d'une région d'arrière-plan pour l'apparence de l'image d'arrière-plan et d'une région de prévisualisation pour l'apparence de la photo externe en temps réel, et une instruction de capture ;
un contrôleur configuré pour générer une image d'arrière-plan mise à jour en attribuant des pixels de l'image d'arrière-plan originale soit à une région de prévisualisation sélectionnée, soit à une région d'arrière-plan sélectionnée,
**caractérisé en ce que**
la valeur de données de pixel de chaque pixel de l'image d'arrière-plan originale est modifiée en définissant le bit le moins significatif (LSB) de la valeur de données de pixel respective comme une valeur de classification de région de sorte que les pixels appartenant à la région de prévisualisation sélectionnée et les pixels appartenant à la région d'arrière-plan sélectionnée aient des valeurs de données de pixel avec des définitions de bit le moins significatif (LSB) différentes ;
un afficheur, sous le contrôle du contrôleur, configuré pour afficher la région d'arrière-plan en utilisant l'image d'arrière-plan mise à jour et afficher la région de prévisualisation en utilisant la photo externe en temps réel fournie en entrée par la partie appareil photo, la région d'arrière-plan et la région de prévisualisation étant identifiées par la valeur de classification de région ;
une partie de génération d'image numérique, sous le contrôle du contrôleur, configurée pour générer une image numérique correspondant à l'image d'arrière-plan mise à jour affichée et à la photo externe en temps réel affichée quand l'instruction de capture est fournie en entrée ; et
une mémoire configurée pour stocker l'image d'arrière-plan originale, l'image d'arrière-plan mise à jour et l'image numérique.

4. Dispositif de génération de fichiers image selon la revendication 3, dans lequel la région de prévisualisation est remplie d'une couleur arbitraire dans l'image d'arrière-plan originale et chaque valeur de donnée de pixel correspondant à la région de prévisualisation a une valeur de données correspondant à la couleur.
